# EUROPEAN PATENT APPLICATION

(11) **EP 1 707 430 A1**
(43) Date of publication of application: **04.10.2006**
(21) Application number: 05703640.2
(22) Date of filing: 14.01.2005
(51) Int. Cl.: B60L 11/12, B60K 6/04, B60K 15/077

(54) **HYBRID VEHICLE**

(30) Priority: 16.01.2004 JP 2004009856
(71) Applicant: YAMAHA HATSUDOKI KABUSHIKI KAISHA, Iwata-shi, Shizuoka 438-8501 (JP)
(72) Inventor: SAITOU, Mikio, Iwata-shi, Shizuoka 438-85 (JP); ARAI, Katsuhiro, Iwata-shi, Shizuoka 438-8501 (JP)
(74) Representative: Grünecker, Kinkeldey, Stockmair & Schwanhäusser Anwaltssozietät
(86) International application number: PCT/JP2005/000401
(87) International publication number: WO 2005/068245

(57) **Abstract**

A hybrid vehicle enabling reliable travel to the destination in second travel mode in which the vehicle travels with the engine off and enabling more effective use the second travel mode. In this vehicle, a electric power travel mode travelable distance calculation section (13) calculates the travelable distance based on the average traveling consumed current value inputted from average traveling consumed current value calculation section (12) and the battery capacity SOC inputted from a battery capacity calculation section (18), and outputs the result to a display section (14). A fuel travelable distance calculation section (8) calculates the remaining travelable distance based on the remaining fuel inputted from a remaining fuel amount measuring section (6) and the fuel consumption inputted from a fuel consumption calculation section (7), and outputs the result to the display section (14). The display section (14) displays the remaining travelable distance for the total of the remaining fuel and the battery capacity SOC for traveling, based on the travelable distance inputted from the electric power travel mode travelable distance calculation section (13) and the remaining travelable distance inputted from the fuel travelable distance calculation section (8).

## Description

### Technical Field

The present invention generally relates to hybrid vehicles. More particularly, the present invention relates to a hybrid vehicle capable of traveling by switching between a first travel mode in which the vehicle travels with the engine on and a second travel mode in which the vehicle travels with the engine off.

### Background Art

Conventionally, with the hybrid vehicle of patent document 1, when the engine or power generator fails, the motor is driven and the vehicle travels using only the power left in the battery.

Further, in the traveling control apparatus for the electric vehicle of patent document 2, the travelable distance or a recommended traveling method with which the user can travel the desired distance is displayed by the remaining battery capacity or fuel consumption information, and power saving traveling is possible by the judgment of the user.
Patent document 1: Japanese Patent Application Laid-Open No.HEI6-245317
Patent document 2: Japanese Patent Application Laid-Open No.HEI11-187505

### Disclosure of Invention

### Problems to be Solved by the Invention

However, the conventional hybrid vehicle of patent document 1 only proposes shift to electric power travel mode as a measure for trouble, and so the characteristic of electric power travel mode is not effectively utilized. The characteristic of electric power travel mode includes low noise level during traveling compared to engine power generating travel mode. Therefore, when using electric power travel mode, it is more effective to travel taking into consideration the remaining battery capacity utilizing the low noise level characteristic. For instance, when traveling late at night to a destination in a residential area, the vehicle can reach the destination without producing engine sound with the use of electric power travel mode.

Since the travelable distance or the recommended traveling method with which the user can travel the desired distance is displayed by the remaining battery capacity or fuel consumption information, and power saving travel is possible by the judgment of the user in the traveling control apparatus of the electric power vehicle of patent document 2 of the prior art, the characteristic of electric power travel mode is not effectively utilized, similar to patent document 1.

It is therefore an object of the present invention to provide a hybrid vehicle that more effectively uses electric power travel mode taking into consideration the remaining battery capacity while utilizing characteristics of electric power travel mode.

### Means for Solving the Problem

A hybrid vehicle of the present invention operates in a first travel mode in which the vehicle travels with an engine on and a second travel mode in which the vehicle travels with the engine off, and this hybrid vehicle employs a configuration having: a setting section that selectively sets the first travel mode and the second travel mode; a detecting section that detects that the second travel mode is set; a determining section that determines whether or not the vehicle is able to travel to a destination with a power amount accumulated in a battery when the detecting section detects that the second travel mode is set; and a control section that makes a shift to the second travel mode when the determining section determines that the vehicle is able to travel to the destination.

### Advantageous Effect of the Invention

According to the present invention, reliable travel to the destination is possible in second travel mode in which the vehicle travels with the engine off, so that electric power travel mode is more effectively utilized.

### Brief Description of Drawings

FIG.1 is a block diagram showing a configuration of a control system of a hybrid vehicle according to embodiment 1 of the present invention;
FIG.2 is a flowchart showing a travel mode shift process of the hybrid vehicle according to embodiment 1;
FIG.3 is a diagram showing a usage range of battery capacity SOC in traveling of the hybrid vehicle according to embodiment 1;
FIG.4 is a block diagram showing a configuration of a control system of a hybrid vehicle according to embodiment 2 of the present invention; and
FIG.5 is a flowchart showing a travel mode shift process of the hybrid vehicle according to embodiment 2.

### Beast Mode for Carrying Out the Invention

An essential feature of the present invention is to allow reliable travel to the destination in second travel mode in which the vehicle travels with the engine off and allow more effective use of second travel mode in the hybrid vehicle mounted with an engine and a drive motor that drives the wheels.

Embodiments of the present invention will now be described in detail with reference to the accompanying drawings.

(Embodiment 1)

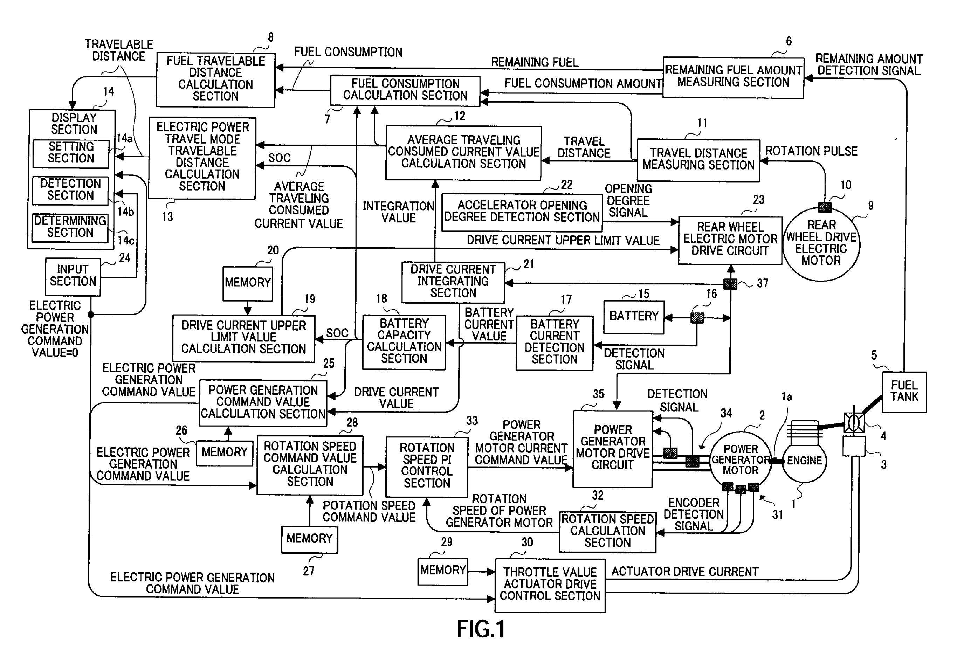

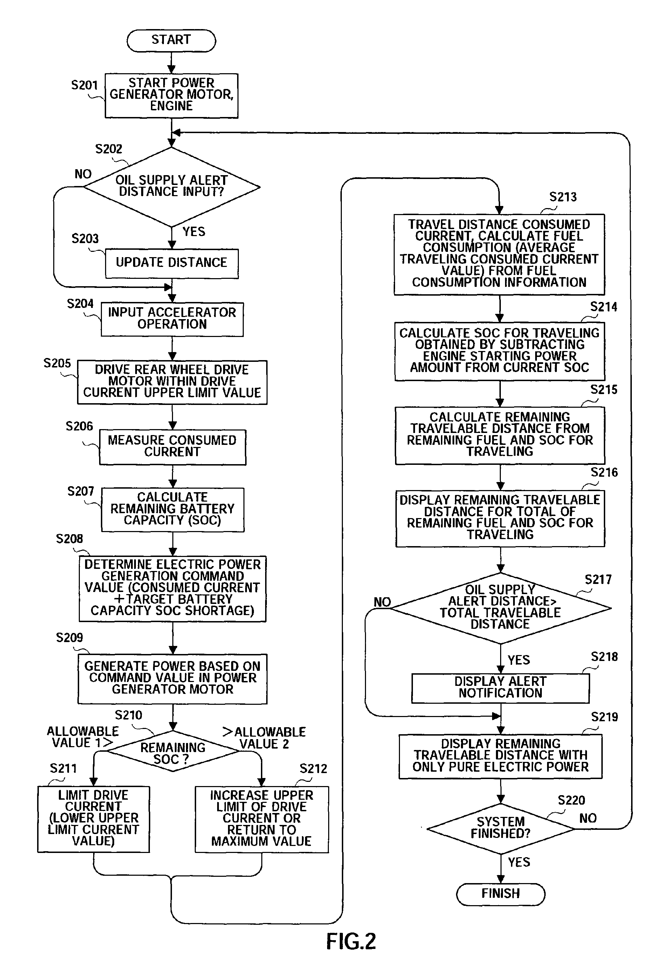

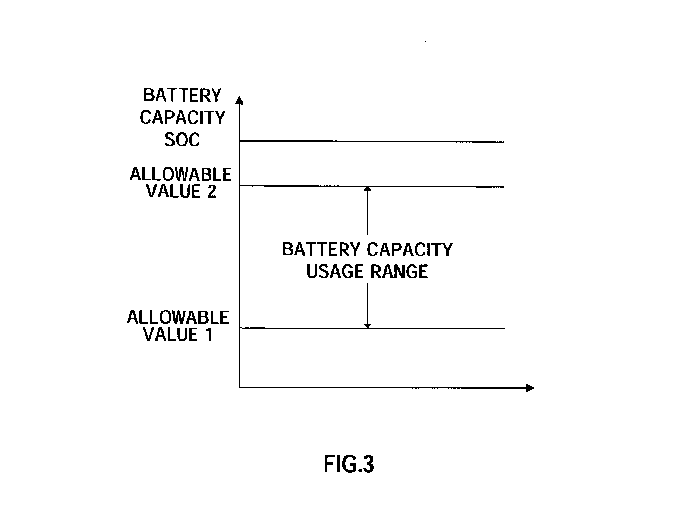

FIG.1 to FIG.3 are diagrams explaining the hybrid vehicle of embodiment 1 applied with the present invention. FIG.1 is a block diagram showing a configuration of a control system of the hybrid vehicle; FIG.2 is a flowchart showing a travel mode shift process; and FIG. 3 is a diagram showing the relationship between the battery charging capacity SOC and allowable values 1 and 2.

The hybrid vehicle of the present embodiment is a series-type hybrid vehicle including a drive motor for driving drive wheels, a battery for supplying power to the drive motor, and a power generator of engine drive-type capable of charging the battery during traveling. The hybrid vehicle of the present embodiment is configured to drive the power generator motor by the engine and alternatively select between first travel mode of traveling by driving a rear wheel drive electric motor while charging the battery with the power generator motor, and second travel mode of traveling by driving the rear wheel drive electric motor with only accumulated power in the battery.

In the present embodiment, first travel mode includes traveling by transmitting dynamic force from the engine to the wheels indirectly via the power transmission mechanism. Second travel mode includes traveling with only power accumulated in the battery as the power source, and, in this travel mode, the engine is off. In the following explanation, the first travel mode will be referred to as "engine power generating travel mode," and second travel mode will be referred to as "electric power travel mode." In engine power generating travel mode (first travel mode), the engine does not need to be constantly on, and includes travel mode that is on and off according to the power amount in the battery.

The configuration of the control system of the hybrid vehicle will be explained first with reference to the block diagram of FIG.1. Engine 1 is started when the crank shaft is driven via a common rotation shaft 1a by power generator motor 2, and the throttle valve opening degree of carburetor 4 is adjusted by throttle valve actuator 3, so that the amount of air introduced into the cylinder is adjusted. Power generator motor 2 is driven by drive current supplied from power generator motor drive circuit 35, thereby starting the crank shaft of engine 1 via common rotation shaft 1a, and is driven by engine 1 and generates power, and supplies the charge current to battery 15.

Throttle valve actuator 3 adjusts the throttle valve opening degree of carburetor 4 with drive current inputted from throttle valve actuator drive control section 30 and adjusts the amount of air introduced in the cylinder of engine 1. Fuel tank 5 supplies fuel to carburetor 4, detects the remaining fuel amount, and outputs a remaining amount detection signal to remaining fuel amount measuring section 6.

Based on the remaining amount detection signal inputted from fuel tank 5, remaining fuel amount measuring section 6 measures the fuel consumption amount and outputs the result to fuel consumption calculation section 7, and measures the remaining fuel and outputs the result to fuel travelable distance calculation section 8. Fuel consumption calculation section 7 calculates the fuel consumption based on the fuel consumption amount inputted from remaining fuel amount measuring section 6, an average traveling consumed current value inputted from a average traveling consumed current value calculation section 12, and battery capacity SOC inputted from battery capacity calculation section 18. Fuel consumption calculation section 7 outputs the calculated fuel consumption to fuel travelable distance calculation section 8.

Fuel travelable distance calculation section 8 calculates the travelable distance based on the remaining fuel inputted from remaining fuel amount measuring section 6 and the fuel consumption inputted from fuel consumption calculation section 7, and outputs the result to display section 14. Since the distance that can be traveled in engine power generating travel mode is determined by the remaining fuel amount in fuel tank 5, fuel travelable distance calculation section 8 calculates the remaining travelable distance using signals from remaining fuel amount measuring section 6 and fuel consumption calculation section 7 of the vehicle.

Rear wheel drive electric motor 9 is driven by the rear wheel drive current inputted from rear wheel electric motor drive circuit 23 and drives the rear wheels. Wheel rotating sensor 10 detects the rotation of the rear wheels and outputs the rotation pulse to travel distance measuring section 11. Travel distance measuring section 11 measures the travel distance based on the rotation pulse inputted from wheel rotation sensor 10, and outputs the result to average traveling consumed current value calculation section 12.

Based on the travel distance inputted from travel distance measuring section 11 and an integration value inputted from drive current integrating section 21, average traveling consumed current value calculation section 12 calculates the average traveling consumed current value and outputs the result to fuel consumption calculation section 7 and electric power travel mode travelable distance calculation section 13. Electric power travel mode travelable distance calculation section 13 calculates the travelable distance based on the average traveling consumed current value inputted from average traveling consumed current value calculation section 12 and the battery capacity SOC inputted from battery capacity calculation section 18, and outputs the result to display section 14.

Display section 14, configured with a liquid crystal display panel, CPU, etc, displays the fuel + electric power travelable distance during engine power generating travel mode and displays the travelable distance with electric power during electric power travel mode based on the travelable distance inputted from fuel travelable distance calculation section 8, and the travelable distance inputted from electric power travel mode travelable distance calculation section 13. Specifically, display section 14 includes input section 24 and setting section 14a with a function of selectively setting engine power generating travel mode and electric power travel mode. Further, display section 14 includes detection section 14b for detecting that electric power travel mode is set, and determining section 14c for determining whether or not the power amount accumulated in battery 15 is enough for travel to the destination when detection section 14b detects that electric power travel mode is set. An oil supply alert distance is inputted from the user to display section 14. Determining section 14c determines whether or not the oil supply alert distance is inputted. The oil supply alert distance is inputted from input section 24 to display section 14, stored in a memory (not shown) of display section 14, and is variable according to signals inputted from input section 24. The oil supply alert distance is uniquely determined by the vehicle according to the shape of fuel tank 5 and the terminating voltage of battery 15 and may be set in advance as an arbitrary default value. The oil supply alert distance is inputted to display section 14, and, determining section 14c may display an oil supply alert upon determining that the remaining travelable distance has reached the oil supply alert distance specified by the user, based on the travelable distance with fuel and the travelable distance in electric power travel mode.
The oil supply alert distance varies with the body shape of the driver of the vehicle, the way of driving the vehicle (for example, manner of acceleration), usage environment (temperature), etc. In view of such points, the oil supply alert distance may be inputted from input section 24 to fuel travelable distance calculation section 8. In this case, a memory is provided in fuel travelable distance calculation section 8, and the oil supply alert distance is set in this memory. Fuel travelable distance calculation section 8 may estimate changes with the body shape of the driver of the vehicle and the way of driving the vehicle (for example, manner of acceleration) from the fuel consumption per unit time in the actual traveling, update the oil supply alert distance from the estimated value and the remaining fuel, and input the result in display section 14. Display section 14 receives the oil supply alert distance to be updated and determining section 14c updates the oil supply alert distance.

Battery 15 supplies drive current to rear wheel electric motor drive circuit 23 with the accumulated power, and is charged by the charge current inputted from power generator motor drive circuit 35. Battery current detector 16 detects the charge current supplied to the positive terminal side of battery 15 and outputs a detection signal to battery current detection section 17. Battery current detection section 17 detects a battery current value based on the detection signal inputted from the battery current detector 16 and outputs the result to battery capacity calculation section 18.

Battery capacity calculation section 18 calculates the battery capacity SOC based on the battery current value inputted from battery current detection section 17 and outputs the result to fuel consumption calculation section 7, electric power travel mode travelable distance calculation section 13, drive current upper limit value calculation section 19, and power generation command value calculation section 25. Drive current upper limit value calculation section 19 reads the drive current upper limit corresponding to the battery capacity from an SOC-drive current upper limit table stored in memory 20 based on the battery capacity inputted from battery capacity calculation section 18, calculates the drive current upper limit value and outputs the result to rear wheel electric motor drive circuit 23. Memory 20 stores the SOC-drive current upper limit drive table.

Drive current integrating section 21 integrates the drive current based on the drive current value inputted from drive current detector 37 and outputs the result to average traveling consumed current value calculation section 12 and power generation command value calculation section 25. Throttle opening degree detection section (shown as accelerator opening degree detection section in FIG.1) 22 outputs a throttle (accelerator) opening degree signal, in accordance with the operation amount of the throttle lever (accelerator lever) by the user, to rear wheel electric motor drive circuit 23. The term "throttle" used in throttle opening degree detection section 22, throttle lever and throttle opening degree signal, is another name for the "throttle" of the throttle valve in for carburetor 4. In order to distinguish between these, throttle opening degree detection section 22, throttle lever, and throttle opening degree signal will be referred to as "accelerator opening degree detection section 22," "accelerator lever," and "accelerator opening degree signal," respectively, in the following explanation.

The drive current generated by the drive of power generator motor 2 is inputted to rear wheel electric motor drive circuit 23 via power generator motor drive circuit 35. Rear wheel electric motor drive circuit 23 generates rear wheel drive current in accordance with the accelerator opening degree signal inputted from accelerator opening degree detection section 22 from the drive current input via power generator motor drive circuit 35 and supplies the current to rear wheel drive electric motor 9. Rear wheel electric motor drive circuit 23 limits the generated rear wheel drive current value to less than or equal to a drive current upper limit inputted from drive current upper limit value calculation section 19. The drive current input to rear wheel electric motor drive circuit 23 through the drive current for power generator motor drive circuit 35, is inputted to rear wheel electric motor drive circuit 23 after being detected at drive current detector 37. The drive current value detected at drive current detector 37 is inputted to rear wheel electric motor drive circuit 23 and to drive current integrating section 21.

Input section 24 includes an engine stop key and outputs a power generation command value = 0 to display section 14, rotation speed command value calculation section 28, and throttle valve actuator drive control section 30, according to the operation of the engine stop key by the user. In other words, since input section 24 outputs the power generation command value = 0, whereby the vehicle enters electric power travel mode, input section 24 is also regarded as having the controlling function for shifting to electric power travel mode. The power generation command value = 0 inputted from input section 24 is based on the determination result displayed by display section 14 based on the information input to display section 14. Input section 24 includes an oil supply alert distance input key, and the oil supply alert distance is inputted to display section 14 through input section 24.
Power generation command value calculation section 25 calculates the power generation command value based on the integrated drive current value inputted from drive current integrating section 21, the battery capacity SOC inputted from battery capacity calculation section 18, and the target battery capacity SOC stored in memory 26. Power generation command value calculation section 25 also outputs the calculated power generation command value to rotation speed command value calculation section 28 and throttle valve actuator drive control section 30. To be more specific, power generation command value calculation section 25 reads the target battery capacity SOC from memory 26 and calculates the power generation command value when the battery capacity SOC inputted from battery capacity calculation section 18 is under the lower limit value set in advance. The calculated power generation command value is outputted to rotation speed command value calculation section 28 and throttle valve actuator drive control section 30, thereby starting engine 1 and shifting to engine power generating travel mode. In other words, power generation command value calculation section 25 has a setting function for selectively setting engine power generating travel mode and electric power travel mode based on the integrated drive current value, the battery capacity SOC, and the target battery capacity SOC that are inputted. Memory 26 stores the target battery capacity SOC.

Memory 27 stores a power generation command value-rotation speed command value table. Based on the power generation command value inputted from power generation command value calculation section 25 or the power generation command value = 0 inputted from input section 24, rotation speed command value calculation section 28 reads the rotation speed command value in accordance with the power generation command value from the power generation command value-rotation speed command value table stored in memory 27.

Memory 29 stores a power generation command value-throttle opening degree command value table. Based on the power generation command value inputted from power generation command value calculation section 25 or the power generation command value = 0 inputted from input section 24, throttle valve actuator drive control section 30 reads the rotation speed command value in accordance with the power generation command value from the power generation command value-rotation speed command value table stored in memory 27, generates actuator drive current, and outputs the current to throttle valve actuator 3.

Rotary encoder 31 detects the rotation of power generator motor 2, and outputs an encoder detection signal to rotation speed calculation section 32. Rotation speed calculation section 32 calculates the rotation speed of power generator motor 2 based on the encoder detection signal inputted from rotary encoder 31 and outputs the rotation speed of the power generator motor to rotation speed PI control section 33. Rotation speed PI control section 33 generates a power generator motor current command value based on the rotation speed command value inputted from rotation speed value calculation section 28 and outputs the result to power generator motor drive circuit 35. That is, rotation speed PI control section 33 calculates a power generator motor current command value to make the rotation speed of power generator motor 2 equal to the rotation speed command value from rotation speed command value calculation section 28 . For instance, if the rotation of power generator motor 2 is insufficient, rotation speed PI control section 33 increases the power generator motor current command value outputted to power generator motor drive circuit 35. If power generator motor 2 rotates to an excess, rotation speed PI control section 33 decreases the power generator motor current command value outputted to power generator motor drive circuit 35.

Current detector 34 is connected to two of three lines connecting power generator motor drive circuit 35 and power generator motor 2, and detects the current that flows through each line and outputs each current detection signal to power generator motor drive circuit 35. Power generator motor circuit 35 generates drive current based on the power generator motor current command value inputted from rotation speed PI control section 33 and each current detection signal inputted from current detector 34 and drive-controls the power generation operation and electric power operation of power generator motor 2.

Since the hybrid vehicle of the present embodiment is a series-type vehicle, if the battery charging amount SOC becomes lower than the lower limit value set in advance during traveling, engine 1 is re-started to start the battery charging operation by power generator motor 2 and electric power travel mode shifts to engine power generating travel mode. This travel mode shifting process will be explained with reference to the flowchart shown in FIG.2.

The hybrid vehicle of the present embodiment calculates the battery capacity with battery capacity calculation section 18 during traveling in electric power travel mode and outputs the result to power generation command value calculation section 25. In step S201 of FIG. 2, when the battery capacity SOC inputted frombattery capacity calculation section 18 is lower than the lower limit value set in advance, power generation command value calculation section 25 reads the target battery SOC from memory 26 and calculates the command value for electric power and outputs the result to rotation speed command value calculation section 28 and throttle value actuator drive control section 30, thereby starting engine 1 and shifting to engine power generating travel mode.

Since the travelable distance in engine power generating travel mode is determined by the remaining fuel amount in fuel tank 5, fuel travelable distance calculation section 8 calculates the remaining travelable distance using signals from remaining fuel amount measuring section 6 and fuel consumption calculation section 7 of the vehicle.

Next, in step S202, in display section 14, determining section 14c determines whether or not the oil supply alert distance is inputted from input section 24. If the oil supply alert distance is not input by input section 24, the process proceeds to step S204, and, if the oil supply alert distance is inputted by input section 24, the process proceeds to step S203, and the fuel travelable distance is inputted based on the input oil supply alert distance. In a configuration where the oil supply alert distance is inputted from input section 24 to display section 14 and fuel travelable distance calculation section 8, determining section 14c determines the update of whether or not the oil supply alert distance is inputted from fuel travelable distance calculation section 8. If the oil supply alert distance is updated, the oil supply alert distance in display section 14 is assumed to be configured with determining section 14c. Subsequently, in step S204, when the accelerator lever is operated by the user and an accelerator opening degree signal in accordance with the operation amount is inputted from accelerator opening degree detection section 22, rear wheel electric motor drive circuit 23 shifts to step S205, generating the rear wheel drive current according to the accelerator opening degree signal, outputting the current to rear wheel drive electric motor 9, and thereafter limiting the rear wheel drive current value to less than or equal to the drive current upper limit value inputted from drive current upper limit value calculation section 19.

Next, in step S206, battery current detection section 17 calculates the consumed current (battery current value) of the battery based on the detection signal inputted from battery current detector 16 after shift to engine power generating travel mode.

In step S207, battery capacity calculation section 18 calculates the battery capacity SOC based on the battery current value inputted from battery current detection section 17, and outputs the result to fuel consumption calculation section 7, electric power travel mode travelable distance calculation section 13, drive current upper limit value calculation section 19 and power generation command value calculation section 25.

In step S208, power generation command value calculation section 25 calculates the power generation command value (consumed current + target battery capacity SOC shortage) based on the drive current value inputted from drive current integrating section 21, the battery capacity SOC inputted from battery capacity calculation section 18 and the target battery capacity SOC stored in memory 20, and outputs the result to rotation speed command value calculation section 28 and throttle valve actuator drive control section 30.

In step S209, power generator motor drive circuit 35 generates the drive current based on the power generator motor current command value inputted from rotation speed PI control section 33 by the power generation command value, and drive-controls the power generation operation of power generator motor 2.

In step S210, drive current upper limit value calculation section 19 determines whether the battery capacity SOC inputted from battery capacity calculation section 18 is smaller than allowable value 1 (lower limit value) or greater than allowable value 2 (upper limit value). FIG. 3 shows the relationship between the battery capacity SOC, allowable value 1 (lower limit value), and allowable value 2 (upper limit value 2). As shown in FIG.3, allowable value 1 (lower limit value: e.g., 30%) and allowable value 2 (upper limit value: 80%) define the usage range of the battery capacity SOC during travel.

If the battery capacity SOC is smaller than allowable value 1 (lower limit value), drive current upper limit value calculation section 19 proceeds to step S211, performing setting to decrease the drive current upper limit set in step S205. If the battery capacity SOC is greater than allowable value 2 (upper limit value), drive current upper limit value calculation section 19 proceeds to step S212, performing setting to increase the drive current upper limit or return to maximum value set in step S205. Thus, by increasing and decreasing the setting of the drive current upper limit based on the current battery capacity SOC, it is possible to adequately change the limit of the drive current amount according to the accelerator operation and offer the user a good travel environment.

In step S213, average traveling consumed current value calculation section 12 calculates the average traveling consumed current value based on the travel distance inputted from travel distance measuring section 11 and the integration value (consumed current) inputted from drive current integrating section 21, and outputs the result to fuel consumption calculation section 7 and electric power travel mode travelable distance calculation section 13. In step S214, battery capacity calculation section 18 calculates the battery capacity SOC for traveling obtained by subtracting the engine starting power amount from the current battery capacity SOC, and outputs the result to fuel consumption calculation section 7 and electric power travel mode travelable distance calculation section 13.

Electric power travel mode travelable distance calculation section 13 calculates the travelable distance based on the average traveling consumed current value inputted from average traveling consumed current value calculation section 12 and the battery capacity SOC inputted from battery capacity calculation section 18, and outputs the result to display section 14. Fuel consumption calculation section 7 calculates the fuel consumption based on the fuel consumption amount inputted from remaining fuel amount measuring section 6, the average traveling consumed current value inputted from average traveling consumed current value calculation section 12 and the battery capacity SOC inputted from battery capacity calculation section 18, and outputs the result to fuel travelable distance calculation section 8.

In step S215, fuel travelable distance calculation section 8 calculates the remaining travelable distance based on the remaining fuel inputted from remaining fuel amount measuring section 6 and the fuel consumption inputted from fuel consumption calculation section 7, and outputs the result to display section 14. In step S216, determining section 14c in display section 14 displays the remaining travelable distance for the total of the remaining fuel and the battery capacity SOC for traveling, based on the travelable distance inputted from electric power travel mode travelable distance calculation section 13 and the remaining travelable distance inputted from fuel travelable distance calculation section 8.

In step S217, determining section 14c in display section 14 determines whether or not the remaining travelable distance is smaller than the oil supply alert distance inputted in step S203. Display section 14 proceeds to step S219 when the remaining travelable distance is greater than the oil supply alert distance, and, when the remaining travelable distance is smaller than the oil supply alert distance, proceeds to step S218 and displays an alert notification.

In step S219, display section 14 (specifically, setting section 14 and detection section 14b) displays the remaining travelable distance only in electric power travel mode, based on the travelable distance inputted from electric power travel mode travelable distance calculation section 13. In step S220, display section 14 determines whether or not the system is finished, where the process returns to step S202 when the system is determined not to be finished, and ends the present process when the system is determined to be finished.

As described above, the hybrid vehicle of the present embodiment, during traveling in engine power generating travel mode, calculates the battery capacity SOC for traveling obtained by subtracting the engine starting power amount from the current battery capacity SOC, calculates the remaining travelable distance from the remaining fuel and the battery capacity SOC for traveling, displays the remaining travelable distance for the total of the remaining fuel and the battery capacity SOC for traveling, and displays the remaining travelable distance only in electric power travel mode, on display section 14.

Therefore, the user is able to determine whether or not the vehicle is able to travel to the destination in electric power travel mode alone from the remaining travelable distance using only the displayed electric power travel mode and thus more effectively use electric power travel mode. Further, the hybrid vehicle of the present embodiment calculates the remaining travelable distance taking into consideration the consumed current during traveling and the battery capacity SOC of accumulated battery, thereby calculating the travelable distance accurately.

Moreover, the hybrid vehicle of the present embodiment employs a configuration where the engine is used to charge the battery, so that the engine operates in most efficient conditions and reduces the production of exhaust gas.

(Embodiment 2)

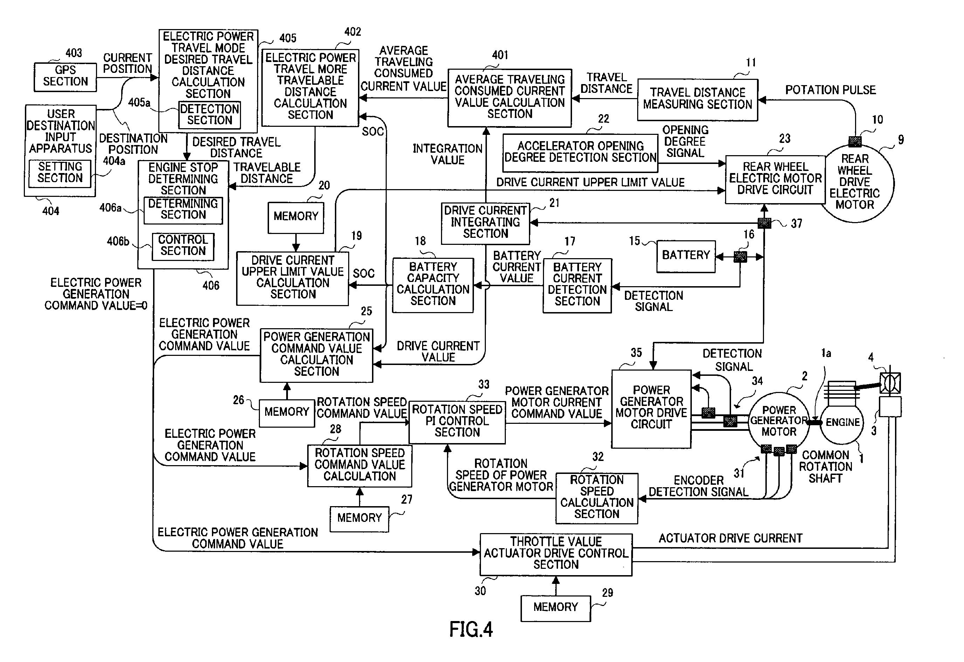

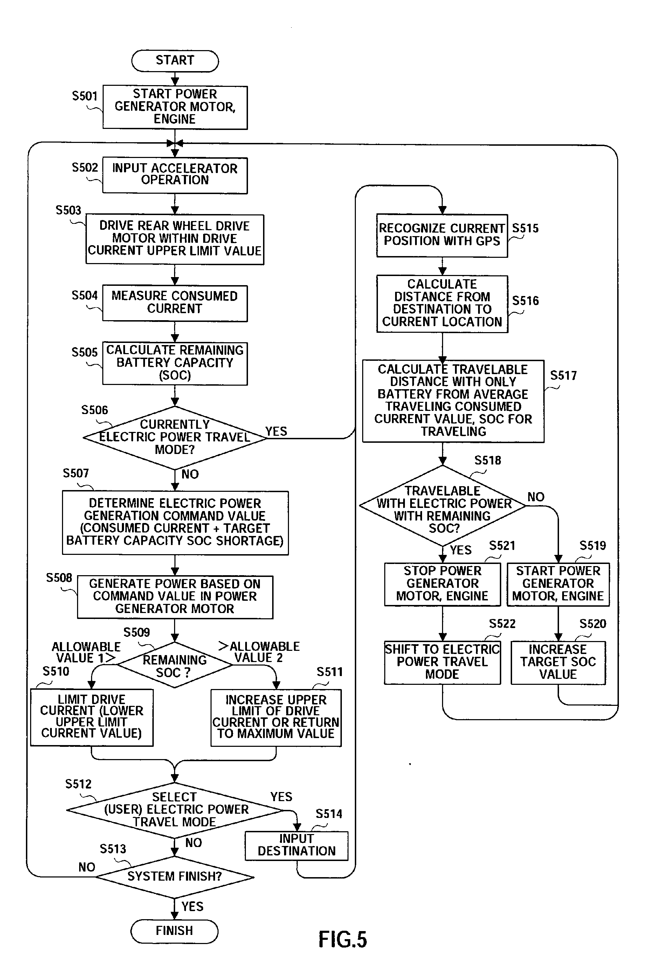

FIG.4 and FIG.5 are diagrams explaining a hybrid vehicle according to embodiment 2 applied with the present invention. FIG.4 is a block diagram showing the configuration of a control system of the hybrid vehicle, and FIG.5 is a flowchart showing a travel mode shift process.

The hybrid vehicle of the present embodiment is a series-type hybrid vehicle, similar to embodiment 1. The configuration of the control system of the hybrid vehicle will be explained first with reference to the block diagram of FIG.4. In the block diagram of FIG.4, the same components as in FIG. 1 of embodiment 1 will be assigned the same reference numerals as in FIG.1 without further explanations.

Average traveling consumed current value calculation section 401 calculates the average traveling consumed current value based on the travel distance inputted from travel distance measuring section 11 and the integration value inputted from drive current integrating section 21 and outputs the result to electric power travel mode travel able distance calculation section 402. Electric power travel mode travelable distance calculation section 402 calculates the travelable distance based on the average traveling consumed current value inputted from average traveling consumed current value calculation section 401 and the battery capacity SOC inputted from battery capacity calculation section 18, and outputs the result to engine stop determining section 406.

GPS (Global Positioning System) section 403 receives the GPS signal, detects the current position of the hybrid vehicle, and outputs the current position to a electric power travel mode desired travel distance calculation section 405. User destination input apparatus 404 is an input apparatus for the user to input the destination, and the target position corresponding to the input destination is outputted to electric power travel mode desired travel distance calculation section 405. User destination input apparatus 404 includes setting section 404a in which the user can freely select the mode for electric power travel. That is, this setting section 404a selectively sets engine power generating travel mode and electric power travel mode. User destination input apparatus 404 includes an engine stop key, similar to input section 24 of embodiment 1 as setting section 404a. When the engine stop key serving as setting section 404a is pressed by the user, information regarding the same is inputted to engine stop determining section 406 through electric power travel mode desired travel distance calculation section 405.

Electric power travel mode desired travel distance calculation section 405 calculates the desired travel distance, based on the current position inputted from GPS section 403 and the destination position inputted from user destination input apparatus 404, and outputs the result to engine stop determining section 406. Further, electric power travel mode desired travel distance calculation section 405 includes detection section 405a for detecting that electric power travel mode is set.

Detection section 405a determines--that is, detects--whether or not electric power travel mode is selected by the user based on the information from user destination input apparatus 404, and outputs the result to engine stop determining section 406.

Engine stop determining section 406 includes determining section 406a for determining whether or not the vehicle is able to travel to the destination with the power amount accumulated in battery 15 when electric power travel mode is detected to be set by the information inputted from detection section 405a, and control section 406b for shifting to electric power travel mode when determining section 406a determines that the vehicle is able to travel to the destination.

Specifically, in engine stop determining section 406, determining section 406a determines whether or not engine 1 can be off--that is whether or not shift to electric power travel mode is possible--based on the travelable distance inputted from electric power travel mode travelable distance calculation section 402 and the desired travel distance inputted from electric power travel mode desired travel distance calculation section 405. When determined as capable of being off, control section 406b outputs the electric power generation command value = 0, to rotation speed command value calculation section 28 and throttle valve actuator drive control section 30.

The engine stop determination in engine stop determining section 406 determines whether or not the vehicle is able to travel to the destination with the power amount accumulated in battery 15 by means of determining section 406a and controls the shift to electric power travel mode by the processes of control section 406b based on the determination. That is, the electric power engine mode or engine power generating travel mode is set by the power generation command value = 0 outputted by the engine stop determination in engine stop determining section 406. Engine stop determining section 406 determines whether or not the vehicle is able to travel to the destination based on the information inputted from electric power travel mode desired travel distance calculation section 405 or electric power travel mode travelable distance calculation section 402--that is, based on the consumed power during traveling and the power amount accumulated in the battery.
In engine stop determining section 406, determining section 406a calculates the travel distance from the current position to the destination, and determines whether or not the vehicle is able to travel to the destination based on the travel distance and the power amount accumulated in battery 15. When determining section 406a determines that the vehicle is not able to travel to the destination, control section 406b sets the target charge value of battery 15 greater than the normal setting value, and charges battery 15 with charging means of engine 1, power generator motor (charging section) 2, power generator motor drive circuit 35, throttle valve actuator 3, carburetor 4 and sections 28, 30, 33, etc. The hybrid vehicle of the present embodiment travels in either engine power generating travel mode or in electric power travel mode. Thus, engine stop determining section 406 has a function for selectively setting engine power generating travel mode or electric power travel mode depending on whether or not the power generation command value = 0 is outputted. The mode selected and set in the previous process may be detected in the next process, and the process for determining whether or not engine 1 can be off may be performed in determining section 406c.

Since the hybrid vehicle of the present embodiment is a series-type, when the battery charging amount SOC becomes lower than the lower limit value set in advance during traveling, engine 1 is re-started to start the charging operation of the battery by power generator motor 2, and shift from electric power travel mode to engine power generating travel mode occurs. The shift process of the travel modes will now be explained with reference to the flowchart shown in FIG.5.

The hybrid vehicle of the present embodiment calculates the battery capacity during traveling in electric power travel mode by means of battery capacity calculation section 18 and outputs the result to power generation command value calculation section 25. Instep S501 of FIG. 5, power generation command value calculation section 25 reads the battery capacity SOC from memory 26 when the battery capacity SOC inputted from battery capacity calculation section 18 becomes lower than the lower limit value set in advance, and calculates the electric power generation command value. Battery capacity calculation section 18 then outputs the calculated electric power generation command value to rotation speed command value calculation section 28 and throttle valve actuator drive control section 30, thereby starting engine 1 and shifts to engine power generating travel mode.

In step S502, rear wheel electric motor drive circuit 23 proceeds to step S503 when the accelerator lever is operated by the user, and the accelerator opening degree signal in accordance with the operation amount is inputted from accelerator opening degree detection section 22, thereby generating the rear wheel drive current in response to the accelerator opening degree signal, supplying the same to rear wheel drive electric motor 9, and limiting the rear wheel drive current value to lower than or equal to the drive current upper limit value inputted from drive current upper limit value calculation section 19.

In step S504, battery current detection section 17 calculates the consumed current (battery current value) of the battery based on the detection signal inputted from battery current detector 16 after shift to engine power generating travel mode.

In step S505, battery capacity calculation section 18 calculates the remaining battery capacity SOC based on the battery current value inputted from battery current detection section 17, and outputs the result to electric power travel mode travelable distance calculation section 402, drive current upper limit value calculation section 19 and power generation command value calculation section 25.

In step S506, electric power travel mode travelable distance calculation section 402 determines whether or not shift to electric power travel mode is possible based on the battery capacity SOC inputted from battery capacity calculation section 18. Electric power travel mode travelable distance calculation section 402 proceeds to step S515 if shift to electric power travel mode is determined possible, and proceeds to step S507 if shift to electric power travel mode is determined not possible.

In step S507, power generation command value calculation section 25 calculates the electric power generation command value (consumed current + target battery capacity SOC shortage) based on the battery current value inputted from drive current integrating section 21, the battery capacity SOC inputted from battery capacity calculation section 18, and the target battery capacity SOC stored in memory 20, and outputs the result to rotation speed command value calculation section 28 and throttle valve actuator drive control section 30.

In step S508, power generator motor drive circuit 35 generates the drive current based on the power generator motor current command value inputted from rotation speed PI control section 33 by the electric power generation command value, and drive-controls the power generation operation of power generator motor 2.

In step S509, drive current upper limit value calculation section 19 determines whether or not the battery capacity SOC inputted from battery capacity calculation section 18 is smaller than allowable value 1 (lower limit value) or greater than allowable value 2 (upper limit value). The relationship between the battery capacity SOC, allowable value 1 (lower limit value) and allowable value 2 (upper limit value 2) is as shown in FIG.3.

If the battery capacity SOC is smaller than allowable value 1 (lower limit value), drive current upper limit value calculation section 19 proceeds to step S510 and lowers the drive current upper limit value set in step S503. Further, if the battery capacity SOC is greater than allowable value 2 (upper limit value), drive current upper limit value calculation section 19 proceeds to step S511 and increases the drive current upper limit value set in step S503 or sets the drive current upper limit value so as to return to the maximum value. Thus, by increasing and decreasing the setting of the drive current upper limit based on the current battery capacity SOC, it is possible to adequately change the limit of the drive current amount according to the accelerator operation and offer the user a good travel environment.

In step S512, in electric power travel mode desired travel distance calculation section 405, detection section 405a determine whether or not electric power travel mode is selected by the user through setting section 404a. The process proceeds to step S513 if detection section 405a of electric power travel mode desired travel distance calculation section 405 determines that electric power travel mode is not selected by the user, and the process proceeds to step S514 if detection section 405a determines that electric power travel mode is selected by the user. In step S513, electric power travel mode desired travel distance calculation section 405 (detection section 450a) determines whether or not the system is finished, and returns to step S502 when the system is determined to be not finished and finishes the present process when the system is determined to be finished.

In step S514, electric power travel mode desired travel distance calculation section 405 is inputted with the destination position from the user destination input apparatus 404, and recognizes the current position inputted from the GPS section 403 in step S515. In step S516, electric power travel mode desired travel distance calculation section 405 calculates the desired travel distance from the target position to the current position, and outputs the result to engine stop determining section 406.

Next, in step S517, electric power travel mode travelable distance calculation section 402 calculates the distance travelable only by battery 15 based on the average traveling consumed current value inputted from average traveling consumed current value calculation section 401 and the SOC for traveling inputted frombattery capacity calculation section 18, and outputs the result to engine stop determining section 406. Electric power travel mode travelable distance calculation section 402 calculates the travelable distance of the remaining battery capacity SOC based on the average traveling consumed current value inputted from average traveling consumed current value calculation section 401 and the remaining battery capacity SOC calculated and inputted in step S505 from battery capacity calculation section 18, and outputs the result to engine stop determining section 406. The average value of consumed current is calculated by average traveling consumed current value calculation section 401 based on the travel distance inputted from travel distance measuring section 11 and the integration value (consumed current) inputted from drive current integrating section 21.

In step S518, in engine stop determining section 406, determining section 406a determines whether or not the vehicle is able to travel the desired travel distance in electric power travel mode with the remaining battery capacity SOC, based on the desired travel distance inputted from electric power travel mode desired travel distance calculation section 405 and the travelable distance (distance travelable at remaining battery capacity SOC) by the battery inputted from electric power travel mode travelable distance calculation section 402.

Determining section 406a of engine stop determining section 406 proceeds to step S519 when it is determined not possible to travel the desired distance in electric power travel mode with the remaining battery capacity SOC, and proceeds to step S521 when it is determined possible to travel the desired distance in electric power travel mode with the remaining battery capacity SOC.

In step S519, control section 406b of power generation command value calculation section 25 outputs the electric power generation command value for starting engine 1, to rotation speed command value calculation section 28 and throttle valve actuator drive control section 30. In step S520, after engine 1 starts, power generation command value calculation section 25 raises the target battery capacity SOC stored in memory 26 and raises the electric power generation command value, and the process returns to step S502.

In step S521, in engine stop determining section 406, control section 406b outputs the power generation command value = 0 to rotation speed command value calculation section 28 and throttle valve actuator drive control section 30, and stops engine 1 since determining section 406a has determined it is possible to travel in electric power travel mode in step S518. In step S522, in engine stop determining section 406, control section 406b shifts to electric power travel mode and returns to step S502.

Therefore, with the hybrid vehicle of the present embodiment, electric power travel mode desired travel distance calculation section 405 calculates the desired travel distance from the current position to the destination position using GPS during traveling in engine power generating travel mode, and electric power travel mode travelable distance calculation section 402 calculates the travelable distance in electric power travel mode from the current remaining battery capacity SOC. In engine stop determining section 406, determining section 406a determines whether or not the vehicle is able to travel to the destination in electric power travel mode based on the desired travel distance and the travelable distance, and control section 406b performs control so as to automatically shift to electric power travel mode when the travel is possible. If the travel is not possible, control section 406b performs control to raise the target battery capacity SOC to increase the charging amount to be accumulated in battery 15.

Therefore, the user simply inputs the destination, and the shift to electric power travel mode is controlled on the system side of the hybrid vehicle, thereby enabling the user to shift to electric power travel mode more effectively without determining the timing of shifting to electric power travel mode. Further, with the hybrid vehicle of the present embodiment, control is performed to temporarily raise the target battery capacity SOC and increase the charging amount to be accumulated in battery 15, so that the travel distance of electric power travel mode can be extended.

Therefore, the user has only to input the destination in advance when, for example, traveling late at night to a destination in a residential area, and the user can reliably travel to the destination in electric power mode and realize traveling that takes the surrounding environment into consideration. In the above embodiment, since GPS section 403 is used, travel history may be stored and the average traveling consumed current value may be calculated based on the travel history. The weight and the like of the user may be set as a travel-related learning value of GPS section 403, and the average value of consumed current may be calculated taking the learning value into consideration. Further, although illustration is omitted in the present embodiment, the hybrid vehicle of the present invention may be added a series of configurations of fuel tank 5, remaining fuel amount measuring section 6, fuel consumption calculation section 7, and fuel travelable distance calculation section 8 shown in embodiment 1 of FIG. 1. This provides a configuration where the oil supply alert distance inputted from input section 24 and the fuel travelable distance outputted from fuel travelable distance calculation section 8 (see FIG.1) are inputted to engine stop determining section 406. In this configuration, determining section 406a of engine stop determining section 406 can perform processes based on information containing the oil supply alert distance in addition to the desired travel distance and the travelable distance inputted from sections 402 and 405, respectively.
That is, in engine stop determining section 406 in the above configuration, determining section 406a determines whether or not the vehicle is able to travel to the destination with the oil supply alert distance that varies according to the power amount accumulated in battery 15 by the drive of engine 1 and travel history of the user added as determining factors.
In this configuration, the oil supply alert distance is outputted to fuel travelable distance calculation section 8 by the input of the user via an input section provided in user destination input apparatus 404. Fuel travelable distance calculation section 8 changes the oil supply alert distance set in advance to a value in accordance with the actual travel, depending on the user, the way the user rides (manner of acceleration, body shape, etc.), usage environment, etc., from the travel history calculated based on the information from GPS section 403. That is, the hybrid vehicle having the above configuration can, with the oil supply alert distance inputted in advance as a reference value, correct (learn) and update the reference value during traveling in accordance with the actual travel history.

Although a case of a series-type hybrid vehicle has been described above with the embodiments, the present invention is also applicable to a parallel-type hybrid vehicle.

The hybrid vehicle according to a first aspect of the present invention is a hybrid vehicle with a first travel mode in which the vehicle travels with an engine on and a second travel mode in which the vehicle travels with the engine off, and employs a configuration having: a setting section that selectively sets the first travel mode and the second travel mode; a detecting section that detects that the second travel mode is set; a determining section that determines whether or not the vehicle is able to travel to a destination with a power amount accumulated in a battery when the detecting section detects that the second travel mode is set; and a control section that makes a shift to the second travel mode when the determining section determines that the vehicle is able to travel to the destination.

According to the above configuration, it is possible to travel to the destination in second travel mode reliably.

The hybrid vehicle according to a second aspect of the present invention employs a configuration in which, with the above configuration, the determining section determines whether or not the vehicle is able to travel to the destination based on consumed power during traveling and the power amount accumulated in the battery.

According to the above configuration, it is possible to estimate the travel distance in second travel mode accurately.

A hybrid vehicle according to a third aspect of the present invention employs a configuration which, with the above configuration, further provides a charging section that charges the battery by setting a target charge value of the battery greater than a normal setting value when the determining section determines that the vehicle is not able to travel to the destination.

According to the above configuration, it is possible to extend the travelable distance in second travel mode on a temporary basis.

A hybrid vehicle according to a fourth aspect of the present invention employs a configuration which, with the above configuration, further provides an input section that inputs the destination; and a current position detecting section that detects a current position, and, in this hybrid vehicle, the determining section calculates a travel distance from the current position to the destination and determines whether or not the vehicle is able to travel to the destination based on the travel distance and the power amount accumulated in the battery.

According to the above configuration, it is possible to determine reliably whether or not the vehicle is able to travel to the destination in second travel mode.

The present application is based on Japanese Patent Application No.2004-009856, filed on January 16, 2004, the entire content of which is incorporated by reference herein.

### Industrial Applicability

The hybrid vehicle according to the present invention allows an effective use of the second travel mode in which the vehicle travels with the engine off and is effective as a travel mode control apparatus for hybrid vehicle.

## Claims

1. A hybrid vehicle having a first travel mode in which the vehicle travels with an engine on and a second travel mode in which the vehicle travels with the engine off, the hybrid vehicle comprising:
a setting section that selectively sets the first travel mode and the second travel mode;
a detecting section that detects that the second travel mode is set;
a determining section that determines whether or not the vehicle is able to travel to a destination with a power amount accumulated in a battery when the detecting section detects that the second travel mode is set; and
a control section that makes a shift to the second travel mode when the determining section determines that the vehicle is able to travel to the destination.

2. The hybrid vehicle according to claim 1, wherein the determining section determines whether or not the vehicle is able to travel to the destination based on consumed power during traveling and the power amount accumulated in the battery.

3. The hybrid vehicle according to claim 1, further comprising a charging section that charges the battery by setting a target charge value of the battery greater than a normal setting value when the determining section determines that the vehicle is not able to travel to the destination.

4. The hybrid vehicle according to claim 1, further comprising:
an input section that inputs the destination; and
a current position detecting section that detects a current position,
wherein the determining section calculates a travel distance from the current position to the destination and determines whether or not the vehicle is able to travel to the destination based on the travel distance and the power amount accumulated in the battery.
